# EUROPEAN PATENT APPLICATION

(11) **EP 3 663 209 A1**
(43) Date of publication of application: **10.06.2020**
(21) Application number: 19213350.2
(22) Date of filing: 03.12.2019
(51) Int. Cl.: B64D 45/00, A01M 29/00, B64D 47/06, B64C 25/00, B64C 25/02

(54) **AIRCRAFT SYSTEM AND METHOD FOR AIRBORNE WILDLIFE DETERENCE**

(30) Priority: 03.12.2018 US 201816207728
(71) Applicant: Rohr, Inc., Chula Vista, CA 91910-2098 (US)
(72) Inventor: KESTLER, Steven M., San Diego, CA 92104 (US); DELANEY, Mac P., San Diego, CA 92123 (US); COETZEE, Brandon, San Diego, CA 92108 (US); UNG, Roger, San Diego, CA 92131 (US)
(74) Representative: Dehns

(57) **Abstract**

A lighting system for an aircraft (1000) includes at least one light (12) mounted on at least one landing gear assembly (10) of the aircraft (1000). The at least one light (12) is configured to emit ultraviolet light when the at least one landing gear assembly (10) is in a lowered condition.

## Description

### BACKGROUND

### 1. Technical Field

This disclosure relates generally to aircraft lighting systems, and more particularly to wildlife deterrence systems.

### 2. Background Information

Aircraft collisions with airborne wildlife (i.e., bird strikes), particularly during take-off and landing, are an increasingly common occurrence and present an appreciable risk of damage to aircraft components (e.g., aircraft engines). As modern aircraft have become increasingly quiet, the risk of bird strikes has increased. Quieter aircraft are more difficult for airborne wildlife to detect. As a result, avoidance by airborne wildlife is more difficult because the wildlife may have less time to clear the flight path of the oncoming aircraft.

### SUMMARY

According to an aspect of the present invention, a lighting system for an aircraft includes at least one light mounted on at least one landing gear assembly of the aircraft. The at least one light is configured to emit ultraviolet light when the at least one landing gear assembly is in a lowered condition.

The at least one light may emit the ultraviolet light at a predetermined wavelength and frequency.

The predetermined wavelength and frequency may be an airborne wildlife deterrence wavelength and frequency.

The airborne wildlife deterrence wavelength and frequency may be configured to deter at least one predetermined airborne species.

The at least one light may emit the ultraviolet light during a take-off or landing operation.

The at least one light may be configured to direct the ultraviolet light toward a flight path vector of the aircraft when the aircraft has a non-zero angle of attack.

The ultraviolet light emitted by the at least one light may be unobstructed by the aircraft between the at least one light and the flight path vector.

The ultraviolet light emitted by the at least one light may be non-visible to humans.

The at least one landing gear assembly may be a plurality of landing gear assemblies. Each landing gear assembly of the plurality of landing gear assemblies may include the at least one light.

The at least one light of each landing gear assembly of the plurality of landing gear assemblies may direct the ultraviolet light in a different direction than each other of the at least one light of each other landing gear assembly of the plurality of landing gear assemblies.

The at least one light may be a plurality of lights. A first at least one light of the plurality of lights may have a first predetermined wavelength and frequency configured to deter a first predetermined airborne wildlife species and a second at least one light of the plurality of lights may have a second predetermined wavelength and frequency, different than the first predetermined wavelength and frequency, and configured to deter a second predetermined airborne wildlife species.

According to an aspect of the present invention, a method for operating a lighting system for an aircraft is disclosed. An ultraviolet light is emitted with at least one light mounted on at least one landing gear assembly. The ultraviolet light is directed toward a flight path vector of the aircraft. The aircraft has a non-zero angle of attack. The ultraviolet light emitted by the at least one light is unobstructed by the aircraft between the at least one light and the flight path vector.

The at least one light may emit the ultraviolet light during a take-off or landing operation.

The at least one light may emit the ultraviolet light when the landing gear assembly is in a lowered condition.

According to an aspect of the present invention, an aircraft includes at least one landing gear assembly and at least one light mounted on the at least one landing gear assembly. The at least one light is configured to emit ultraviolet light. The at least one light is configured to direct the ultraviolet light toward a flight path vector of the aircraft when the aircraft has a non-zero angle of attack.

The at least one light may emit the ultraviolet light at a predetermined wavelength and frequency.

The landing gear assembly may include a plurality of landing gear assemblies. Each landing gear assembly of the plurality of landing gear assemblies may include at least one light.

The at least one light of each landing gear assembly of the plurality of landing gear assemblies may direct the ultraviolet light in a different direction than each other of the at least one light of each other landing gear assembly of the plurality of landing gear assemblies.

The at least one light may emit the ultraviolet light during a take-off or landing operation.

The ultraviolet light emitted by the at least one light may be unobstructed by the aircraft between the at least one light and the flight path vector.

As used herein, UV light may be light having a wavelength in the range of 10-400 nm. In various embodiments, light in the range of 300-400 nm may be most useful for deterring airborne species. Of course, the effectiveness of the particular wavelength will vary between species and so UV light over the broader range (10-400 nm) may be used in the invention.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 is a perspective view of an aircraft.
FIG. 2 is a side view of an exemplary landing gear assembly.
FIG. 3 is a side view of an aircraft with the exemplary landing gear assembly of FIG. 2.
FIG. 4 is a cross-sectional, top view of the aircraft of FIG. 3.
FIG. 5 is a side view of an aircraft having a non-zero angle of attack.
FIG. 6 is a side view of the aircraft of FIG. 3 having a non-zero angle of attack.
FIG. 7 is a method of operating a lighting system for an aircraft.

### DETAILED DESCRIPTION

It is noted that various connections are set forth between elements in the following description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

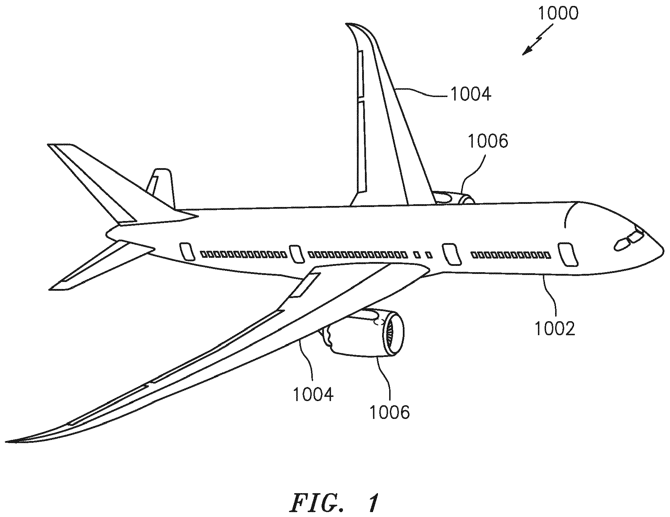

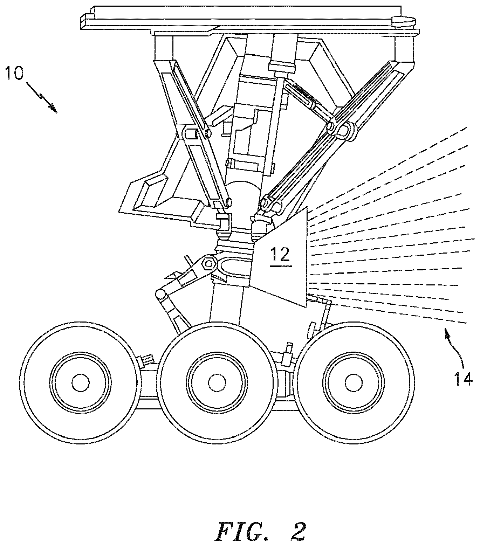

Referring to FIGS. 1 and 2, an aircraft 1000 is generally illustrated. The aircraft 1000 includes a fuselage 1002, wings 1004, and gas turbine engines 1006. One or more of the fuselage 1002 and the wings 1004 includes at least one landing gear assembly 10. It is noted that while the aircraft 1000 depicted in FIG. 1 is a commercial fixed-wing aircraft, in other aspects, the aircraft may be any other suitable aircraft, for example, a rotary-wing aircraft.

Referring to FIG. 2, the at least one landing gear assembly 10 is illustrated. As previously discussed, one or more of the fuselage 1002 and the wings 1004 of the aircraft 1000 may include the at least one landing gear assembly 10. For example, in some embodiments, the at least one landing gear assembly 10 may be retractably disposed within the fuselage 1002 and/or the wings 1004. As one of ordinary skill in the art will appreciate, the at least one landing gear assembly 10 may be positioned in a "lowered condition" (i.e., fully or partially extended) during, for example, ground operations, take-off, and just prior to landing. The at least one landing gear assembly 10 may be retracted (i.e., raised) during flight to promote improved aerodynamic qualities of the aircraft 1000. For example, the at least one landing gear assembly 10 may be retracted into the fuselage 1002 and/or the wings 1004. In other embodiments, the at least one landing gear assembly 10 may be configured as a fixed landing gear assembly, a skid, or any other suitable landing gear assembly.

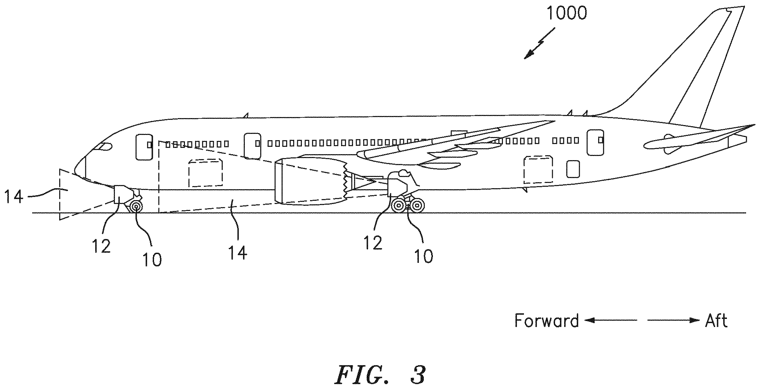

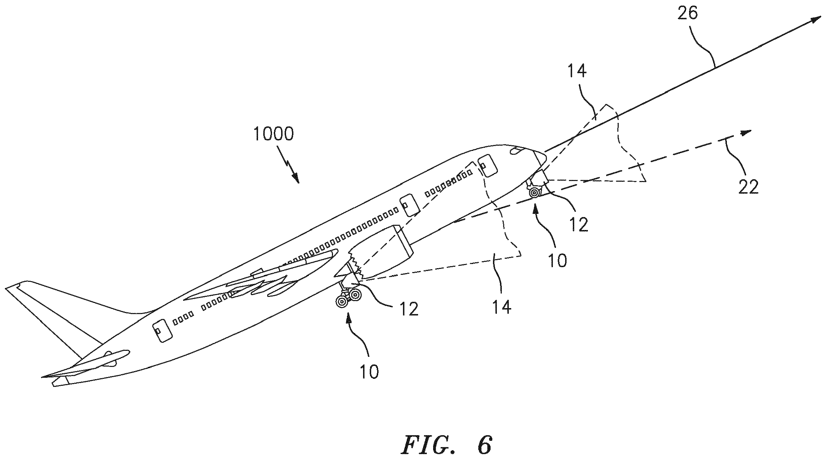

Referring to FIGS. 2-4, the at least one landing gear assembly 10 includes at least one light 12. The at least one light 12 is configured to emit ultraviolet (UV) light 14 (e.g., light having a wavelength of approximately 10-400 nanometers (nm)). The at least one light 12 may be any suitable light configured to emit UV light 14 such as, for example, incandescent lights, LED lights, gas-discharge lights, lasers, etc. As will be discussed in further detail, the at least one light 12 may generally direct the UV light 14 toward a flight path vector 22 (see FIG. 6) of the aircraft 1000 thereby deterring airborne wildlife (i.e., birds, bats, etc.) from occupying the flight path vector 22 of the aircraft 1000. The location of the at least one light 12 on the at least one landing gear assembly 10 may provide improved aerodynamic qualities (e.g., reduced wind resistance) of the aircraft 1000 during normal aircraft operations, for example, when the at least one landing gear assembly 10 is in a raised condition during flight. In some embodiments, however, the at least one light 12 may be disposed on other portions of the aircraft 1000, for example, the fuselage 1002, wings 1004, gas turbine engines 1006, etc. As used herein, "deter" means to alert airborne wildlife to the presence of the approaching aircraft 1000 so as to provide the airborne wildlife with an increased opportunity to avoid collision with the aircraft 1000. It is noted that the bounds of the UV light 14 depicted in FIGS. 3, 4, and 6 are provided for ease of understanding. The breadth and range of the UV light 14 should not be understood to be limited as depicted.

Visual capabilities of airborne wildlife (e.g., birds) may permit said airborne wildlife to visually perceive UV light 14 that would generally be non-visible to humans. Thus, by emitting and/or pulsing UV light 14, the visibility of an aircraft (e.g., aircraft 1000) may be increased with respect to airborne wildlife (i.e., the UV light 14 may alert the airborne wildlife to the presence of the approaching aircraft 1000). Increased visibility may provide the airborne wildlife greater opportunity to avoid collision with the aircraft 1000 by clearing the flight path vector 22 of the aircraft.

The at least one light 12 may emit UV light 14 having a predetermined wavelength and/or frequency. For example, the UV light 14 may have a predetermined wavelength and/or frequency corresponding to an airborne wildlife deterrence wavelength and/or frequency (i.e., the wavelength and/or frequency is selected for deterrence of airborne wildlife by, for example, achieving optimum visibility of the UV light 14 with respect to airborne wildlife). In some embodiments, the airborne wildlife deterrence wavelength and/or frequency may be configured to deter at least one predetermined airborne wildlife species (e.g., geese, gulls, etc.). For example, the wavelength and/or frequency of the UV light 14 may be selected for optimum visibility of the UV light 14 by the at least one airborne wildlife species, thereby improving deterrence of the at least one airborne wildlife species from the flight path vector 22 of the aircraft 1000.

Configuration of the predetermined wavelength and/or frequency (e.g., the airborne wildlife deterrence wavelength and/or frequency) to deter at least one predetermined airborne wildlife species may be desirable, for example, where a particular airborne wildlife species is known to operate in a particular area (e.g., in the vicinity of a destination airport). For further example, said configuration of the predetermined wavelength and/or frequency may be desirable based on altitude, for example, where bird strikes by a particular airborne wildlife species are more common at a particular altitude while bird strikes by a different particular airborne wildlife species are more common at a different altitude. Accordingly, the predetermined wavelength and/or frequency of the UV light 14 emitted by the at least one light 12 may be adjusted based on the particular species of airborne wildlife most likely to strike the aircraft 1000.

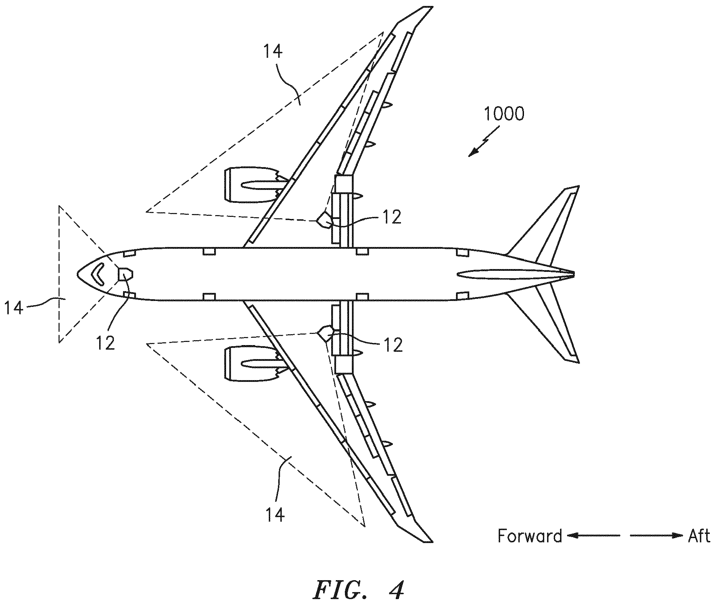

In some embodiments, the at least one landing gear assembly 10 may be a plurality of landing gear assemblies 10 with each landing gear assembly of the plurality of landing gear assemblies 10 including at least one light 12. The at least one light 12 of each landing gear assembly of the plurality of landing gear assemblies 10 may direct the UV light 14 in a same direction or a different direction than each other of the at least one light 12 of each other landing gear assembly of the plurality of landing gear assemblies 10 (see, e.g., FIG. 4).

In some embodiments, the at least one light 12 may be a plurality of lights 12. Each light of the plurality of lights 12 may be configured to emit UV light 14 having the same wavelength and/or frequency. In some embodiments, a first at least one light of the plurality of lights 12 may emit UV light 14 having a first wavelength and/or frequency while a second at least one light of the plurality of lights 12 may emit UV light 14 having a second wavelength and/or frequency, different than the first wavelength and/or frequency. In some embodiments, the first wavelength and/or frequency may be configured to deter a first at least one predetermined airborne wildlife species while the second wavelength and/or frequency may be configured to deter a second at least one predetermined airborne wildlife species.

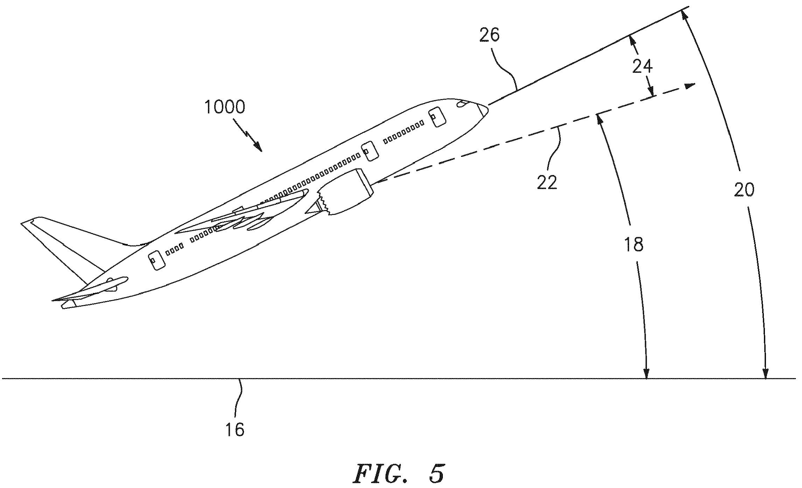

FIG. 5 generally illustrates an aircraft 1000 having a non-zero angle of attack, for example, during a take-off or a landing operation. The aircraft 1000 includes a longitudinal axis 26 extending generally forward to aft through the fuselage 1002. A pitch angle 20 (i.e., attitude) of the aircraft 1000 is the angle between the longitudinal axis 26 and the horizon 16. A flight path vector 22 of the aircraft 1000 defines the actual direction of intended travel of the aircraft 1000. A flight path angle 18 of the aircraft 1000 is the angle between the flight path vector 22 and the horizon 16. The angular difference between the longitudinal axis 26 and the flight path vector 22 (if any) defines an angle of attack 24.

Shadowing (i.e., obstruction) of the UV light 14 by the aircraft 1000, between the at least one light 12 and the flight path vector 22, may reduce the effectiveness of the UV light 14 in deterring airborne wildlife. For example, depending on the location of the at least one light 12 with respect to the aircraft 1000, components of the aircraft 1000 (e.g., the fuselage 1002 or the engines 1006) may obstruct some or all of the UV light from reaching the flight path vector 22. The location of the at least one light 12 on the at least one landing gear assembly 10 may reduce or prevent shadowing effects of the aircraft 1000 by providing a more direct line-of-sight between the at least one light 12 and the flight path vector 22 with respect to potentially obstructing surfaces of the aircraft 1000. Shadowing of the UV light 14 may be further reduced by directing the UV light 14 toward the flight path vector 22 of the aircraft 1000 when the aircraft has a non-zero angle of attack 24. For example, the UV light 14 emitted by the at least one light 12 may be partially or completely unobstructed by the aircraft 1000 between the at least one light 12 and the flight path vector 22.

In some embodiments, the at least one light 12 may be activated or deactivated manually (e.g., by a pilot). For example, the at least one light 12 may be activated when the aircraft 1000 is proceeding to lower altitudes (e.g., below 3,000 meters), where the majority of bird strikes occur. Alternatively, in some embodiments, the at least one light 12 may be activated or deactivated automatically (e.g., by a control system) when the landing gear assembly 10 is in a lowered condition.

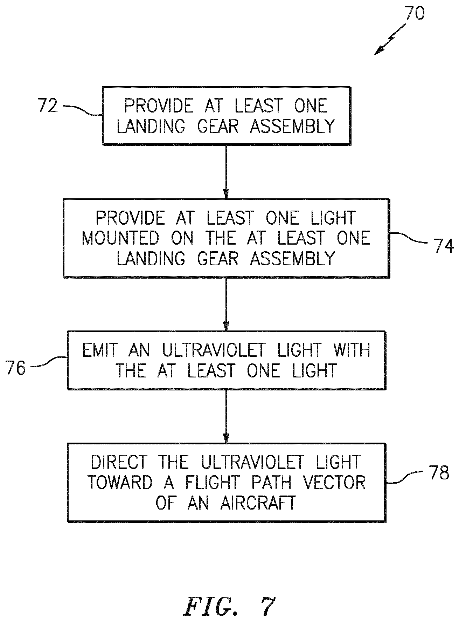

FIG. 7 is a flow diagram of a method 70 for operating an aircraft lighting system. In step 72, at least one landing gear assembly 10 is provided (see, e.g., FIG. 2). In step 74, at least one light 12, mounted on the at least one landing gear assembly 10 is provided (see, e.g., FIG. 2). In step 76, UV light 14 is emitted with the at least one light 12 (see, e.g., FIGS. 3, 4, and 6). In step 78, the UV light 14 is directed toward a flight path vector 22 of the aircraft 1000 (see, e.g., FIG. 6).

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. Accordingly, the present disclosure is not to be restricted except in light of the attached claims and their equivalents.

## Claims

1. A lighting system for an aircraft (1000), the system comprising:
at least one light (12) mountable on at least one landing gear assembly (10) of the aircraft (1000);
wherein the at least one light (12) is configured to emit ultraviolet light when the at least one landing gear assembly (10) is in a lowered condition,

2. The system of claim 1, wherein the at least one light (12) is configured to direct the ultraviolet light toward a flight path vector (22) of the aircraft (1000) when the aircraft (1000) has a non-zero angle of attack (24).

3. An aircraft comprising:
at least one landing gear assembly (10); and
at least one light (12) mounted on the at least one landing gear assembly (10);
wherein the at least one light (12) is configured to emit ultraviolet light;
wherein the at least one light (12) is configured to direct the ultraviolet light toward a flight path vector (22) of the aircraft (1000) when the aircraft (1000) has a non-zero angle of attack.

4. The system or aircraft of claim 2 or 3, wherein the ultraviolet light emitted by the at least one light (12) is unobstructed by the aircraft (1000) between the at least one light (12) and the flight path vector (22).

5. The system or aircraft of any preceding claim, wherein the at least one light (12) is configured to emit the ultraviolet light at a predetermined wavelength and frequency,
wherein the predetermined wavelength and frequency is optionally an airborne wildlife deterrence wavelength and frequency,
wherein the airborne wildlife deterrence wavelength and frequency is optionally configured to deter at least one predetermined airborne species.

6. The system or aircraft of any preceding claim, wherein the at least one landing gear assembly (10) comprises a plurality of landing gear assemblies, each landing gear assembly (10) of the plurality of landing gear assemblies comprising at least one light (12),
wherein the at least one light (12) of each landing gear assembly (10) of the plurality of landing gear assemblies optionally directs the ultraviolet light in a different direction than each other of the at least one light (12) of each other landing gear assembly (10) of the plurality of landing gear assemblies.

7. The system or aircraft of any preceding claim, wherein the at least one light (12) is configured to emit the ultraviolet light during a take-off or landing operation.

8. The system or aircraft of any preceding claim, wherein the ultraviolet light emitted by the at least one light is non-visible to humans.

9. The system or aircraft of any preceding claim:
wherein the at least one light is a plurality of lights (12); and
wherein a first at least one light of the plurality of lights (12) has a first predetermined wavelength and frequency configured to deter a first predetermined airborne wildlife species and a second at least one light of the plurality of lights (12) has a second predetermined wavelength and frequency, different than the first predetermined wavelength and frequency, and configured to deter a second predetermined airborne wildlife species.

10. A method for operating a lighting system for an aircraft (1000), the method comprising:
emitting an ultraviolet light using at least one light (12) mounted on at least one landing gear assembly (10); and
directing the ultraviolet light toward a flight path vector (22) of the aircraft (1000);
wherein the aircraft (1000) has a non-zero angle of attack; and
wherein the ultraviolet light emitted by the at least one light (12) is unobstructed by the aircraft (1000) between the at least one light (12) and the flight path vector (22).

11. The method of claim 10, wherein the at least one light (12) emits the ultraviolet light during a take-off or landing operation.

12. The method of claim 10 or 11, wherein the at least one light (12) emits the ultraviolet light when the landing gear assembly (10) is in a lowered condition.
